Europäisches Patentamt

**European Patent Office**

Office européen des brevets

(11) Veröffentlichungsnummer: **0 143 855**

**A1**

(12) **EUROPÄISCHE PATENTANMELDUNG**

(21) Anmeldenummer: **83110898.0**

(22) Anmeldetag: **02.11.83**

(51) Int. Cl.⁴: **F 24 F 7/08**
**F 25 B 29/00, F 24 J 3/00**

(43) Veröffentlichungstag der Anmeldung:
**12.06.85 Patentblatt 85/24**

(84) Benannte Vertragsstaaten:
**AT BE CH FR LI LU NL**

(71) Anmelder: **H. Krantz GmbH & Co.**
**Krantzstrasse o. Nr.**
**D-5100 Aachen(DE)**

(72) Erfinder: **Richarts, Fritz, Dr.-Ing.**
**Dellstrasse 18**
**D-5100 Aachen(DE)**

(74) Vertreter: **Bauer, Hubert**
**Lothringer Strasse 53**
**D-5100 Aachen(DE)**

(54) Verfahren zur Wärmerückgewinnung.

(57) Zur Wärmerückgewinnung wird vorgeschlagen, ein Wärmerückgewinnungssystem mit kreislaufverbundenen Wärmeübertragern und ein vorzugsweise nach dem "Lorenz-Prinzip" betriebenes Wärmepumpensystem zu kombinieren. Im Gegensatz zu einer bekannten Verfahrensweise soll jedoch der Flüssigkeitskreislauf während des Betriebes der Wärmepumpe, die wahlweise abschaltbar sein soll, nicht in zwei oder drei separate Kreisläufe aufgeteilt werden müssen, sondern der Flüssigkeitskreislauf unverändert weiterbetrieben werden. Dazu wird vorgeschlagen, das den Fortluftkühler verlassende warme Wärmeträgermittel im Kondensator der Wärmepumpe zusätzlich aufzuheizen und das die Vorwärmer- bzw. Kühlergruppe verlassende kalte Wärmeträgermittel in einem Verdampfer der Wärmepumpe zusätzlich abzukühlen.

*Fig. 1*

Verfahren zur Wärmerückgewinnung

Die Erfindung betrifft ein Verfahren zur Wärmerückgewinnung aus fluiden Medien, vorzugsweise Luft, mit unterschiedlichen Temperaturen, wobei ein Kreislauf eines Wärmeträgermittels verwendet wird, dessen Eintrittstemperaturen in eine Vorwärm- bzw. Kühlergruppe mittels eines Wärmepumpenprozesses verändert werden.

Ein derartiges Verfahren, bei dem ein Wärmerückgewinnungssystem mit im Kreislauf verbundenen Wärmeübertragern und ein Wärmepumpensystem kombiniert sind, ist aus der DE-OS 29 22 179 bekannt. Zur Durchführung des Verfahrens dient eine Einrichtung, mit der Trocknungsluft für einen Hordentrockner temperiert wird, wobei die Temperiereinrichtung einen einem Zulufteinlaß einer Trocknungsstrecke in Luftströmungsrichtung vorgeschalteten Hauptlufterhitzer aufweist sowie eine Anlage umfaßt, die zur individuellen Wärmerückgewinnung zwei an ein geschlossenes Rohrleitungssystem einschließlich Umwälzpumpe anschaltbare, innenseitig über das Rohrleitungssystem im Kreislauf mit einem flüssigen Wärmeträger beaufschlagbare, rekuperative Rohrbündel-Wärmetauschereinheiten aufweist. Die erste Wärmetauschereinheit ist dem Fortluftauslaß der Trocknungsstrecke in Luftströmungsrichtung nachgeschaltet und als außen von der Fortluft beaufschlagter Luftkühler ausgebildet. Die zweite Wärmetauschereinheit dient als außen von der Außenluft beaufschlagter Vorlufterhitzer und ist dem Zulufteinlaß der Trocknungsstrecke sowie dem Hauptlufterhitzer in Luftströmungsrichtung vorgeschaltet. Die im Bereich der ersten Wärmetauschereinheit durch
den Wärmeträger aus der Fortluft aufgenommene Wärme läßt sich
somit an die zuströmende Außenluft im Bereich der zweiten
Wärmetauschereinheit abgeben.

Um den Energiebedarf zur Durchführung des Trocknungsverfahrens
weiter zu verringern, wird in der DE-OS 29 22 179 vorgeschlagen,
der Anlage zur indirekten Wärmerückgewinnung außer einem geschlossenen Rohrleitungssystem einschließlich Umwälzpumpe einen
Wärmepumpenkreislauf in Form von über Rohrleitungen miteinander verbundenem Verdampferteil, Verdichter, Kondensatorteil
sowie Druckreduzierventil zuzuordnen. Damit läßt sich Wärme
vom durch die Rohrleitungen des Wärmepumpenkreislaufs strömenden
Wärmeträger aus der abströmenden Fortluft aufnehmen und diese
Wärme über den durch die Rohrleitungen des Wärmepumpenkreislaufs strömenden Wärmeträger an die zuströmende Außenluft
abgeben, wobei diese Wärme durch den Verdichter auf ein höheres
Energieniveau gebracht werden kann.

Dieses bekannte Wärmerückgewinnungssystem erfordert stets zwei
stufig ausgeführte Wärmeübertragungsgruppen. Hierdurch sind
verschiedene Betriebsarten möglich, bei denen die Wärmepumpe,
sofern sie mitbetrieben wird, stets die gesamte Wärme, die
über sie zurückgewonnen wird, durch den Kältemittelkreislauf
überträgt. In diesem Falle ist eine Aufteilung des Flüssigkeitskreislaufs mit Hilfe von Umschaltventilen notwendig, die den Fortluftkühler von der unmittelbaren Verbindung zum Außenluftvorwärmer abtrennen und direkt mit dem Verdampfer der Wärmepumpe verbinden. Ebenso ist durch ein Umschalten der Ventile der Außenluftvorwärmer separat mit dem Kondensator der Wärmepumpe zu verbinden. Der gesamte Flüssigkeitskreislauf muß somit in zwei oder drei separate Kreisläufe aufgeteilt werden, wenn die Wärmepumpe eingeschaltet wird.

Der Erfindung liegt die Aufgabe zugrunde, ein Verfahren zur Wärmerückgewinnung vorzuschlagen, das sich mit einem stets geschlossenen Kreislauf betreiben läßt, so daß auf Ventilumoder -abschaltungen verzichtet werden kann und das wahlweise mit oder ohne Wärmepumpe betriebene System bei abgeschalteter Wärmepumpe unverändert bleiben kann.

Ausgehend von dem eingangs beschriebenen Verfahren wird zur Lösung der gestellten Aufgabe vorgeschlagen, daß das einen Fortluftkühler verlassende warme Wärmeträgermittel in einem Kondensator einer Wärmepumpe zusätzlich aufgeheizt und das die Vorwärmer- bzw. Kühlergruppe verlassende kalte Wärmeträgermittel in einem Verdampfer der Wärmepumpe zusätzlich abgekühlt wird.

Bei dem erfindungsgemäßen Verfahren strömt das in dem Rohrleitungssystem des Regenerators zirkulierende flüssige Wärme-

- 4 -

trägermittel vom Fortluftkühler durch den Kondensator der Wärmepumpe zu dem Außenluftvorwärmer und von dort aus durch den Verdampfer der Wärmepumpe zu dem Fortluftkühler. Dadurch läßt sich also stets ein geschlossener Kreislauf aufrechterhalten, so daß aufwendige Um- und Abschaltventile entbehrlich sind. Bei abgeschalteter Wärmepumpe vollzieht sich die Wärmerückgewinnung innerhalb des unveränderten Systems nach einem an sich bekannten Verfahren. Das System ist in der VDI-Richtlinie 2071 als "Regeneratoren mit Trennflächen (Kategorie II)" bezeichnet. Mit diesem System für sich sind jedoch nur verhältnismäßig geringe Rückwärmewerte erzielbar. In der erfindungsgemäßen Kombination mit dem Wärmepumpensystem bietet dieses System dagegen konzeptionelle und konstruktive Vorteile:

- Die Schaltung ist anlagentechnisch einfach auszuführen, wobei keine Umschalt- oder Regelorgane benötigt werden.

- Der Wärmerückgewinner kann bei geringer Last ohne Wärmepumpe nach herkömmlicher Art betrieben werden.

- Vorhandene Wärmerückgewinner, die als Regeneratoren mit Trennflächen (Kategorie II) betrieben werden, lassen sich mit geringem Umbauaufwand zur Durchführung des erfindungsgemäßen Verfahrens erweitern.

- Gegenüber herkömmlichen Wärmerückgewinnern mit Wärmepumpen lassen sich wesentlich günstigere Leistungszahlen (z. B. um 50 % höher) erzielen.

Nach einer Ausgestaltung des erfindungsgemäßen Verfahrens werden die Eintrittstemperaturen des im separaten Kreislauf geführten Trägermittels durch einen nach dem "Lorenz-Prinzip" betriebenen Wärmepumpenprozeß verändert.

Die in der Wärmepumpen- und Kältetechnik an sich bekannte Anwendung des "Lorenz-Prozesses" bietet gegenüber dem bisher üblichen "Carnot-Prozeß" insbesondere den erheblichen energietechnischen Vorteil, daß dabei eine nicht isotherme Zustandsänderung des Arbeitsmittels bei der Wärmezufuhr und bei dem Wärmeentzug erfolgt.

Nach einer weiteren Ausgestaltung des erfindungsgemäßen Verfahrens ist die Menge des im Kreislauf geführten Wärmeträgermittels auf ein bestimmtes Verhältnis zu den jeweiligen Volumenströmen der zu- bzw. abströmenden Medien einstellbar, wodurch sich eine Optimierung der Wärmerückgewinnung erzielen läßt.

Weiterhin ist es vorteilhaft, wenn nach einer weiteren Ausgestaltung des erfindungsgemäßen Verfahrens die Abwärme eines eine Kompressionswärmepumpe antreibenden Motors für das Nachheizen des zuströmenden Mediums verwendet wird.

Schließlich sieht eine Ausgestaltung des erfindungsgemäßen Verfahrens noch vor, daß die Enthitzungswärme des verdichteten Kältemittels getrennt von der Kondensationswärme in einem zusätzlichen Wärmeübertrager an das aufzuwärmende Fluid abgegeben wird.

In der Zeichnung ist ein Ausführungsbeispiel einer Anlage zur Durchführung des erfindungsgemäßen Verfahrens dargestellt. Es zeigen:

Fig. 1    ein Anlagenschema;

Fig. 2    ein Temperaturschema;

Fig. 3    ein Zustandsänderungsdiagramm.

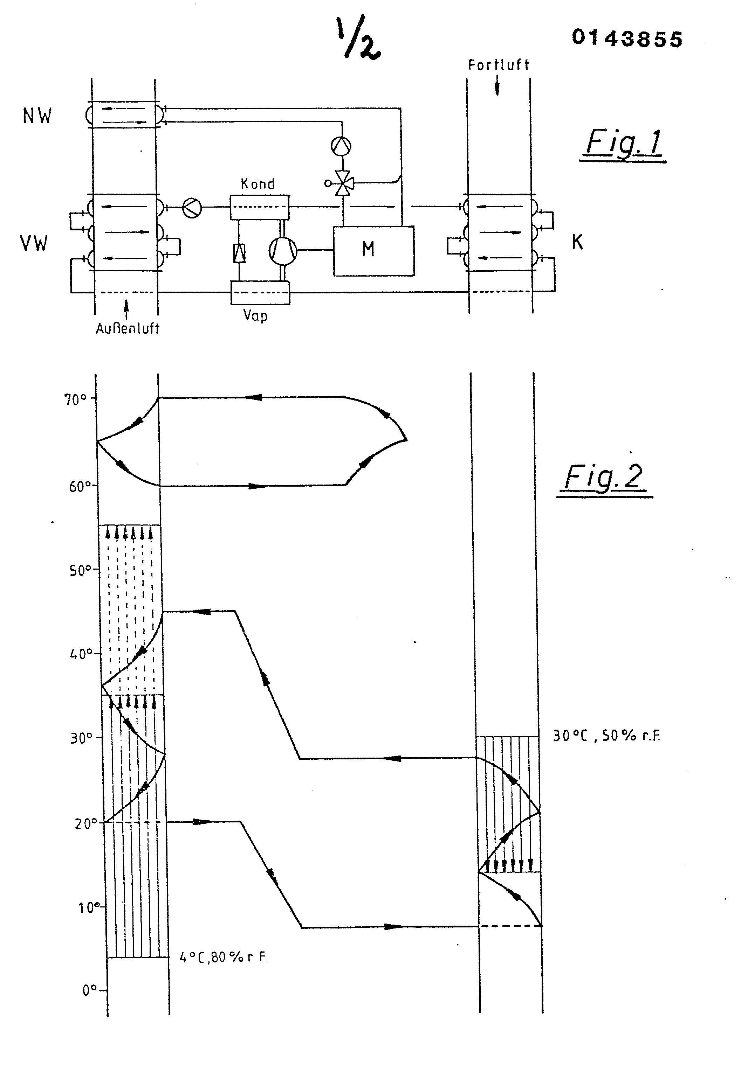

Die Anlage gemäß Fig. 1 besteht im wesentlichen aus einer die zuströmende Außenluft erwärmenden Vorwärmergruppe VW und einer Nachwärmergruppe NW sowie einer die abströmende Fortluft kühlenden Kühlergruppe K.

Die Vorwärmer- bzw. Kühlergruppen sind mit einem Flüssigkeitskreislauf FK sowie mit einer durch einen Verbrennungsmotor M betriebenen Kompressionswärmepumpe KWP verbunden, deren Motorwärme für das Nachheizen der zuströmenden Außenluft in der Nachwärmergruppe NW verwendet wird.

Wie das Temperaturschema in Fig. 2 zeigt, erfolgt die Anhebung der Flüssigkeitstemperatur im Kondensator und die Absenkung der Flüssigkeitstemperatur im Verdampfer. Dabei wird zur Optimierung der Wärmerückgewinnung die zirkulierende Flüssigkeitsmenge auf ein bestimmtes Verhältnis zu den Außen- bzw. Fortluftmengen fest eingestellt.

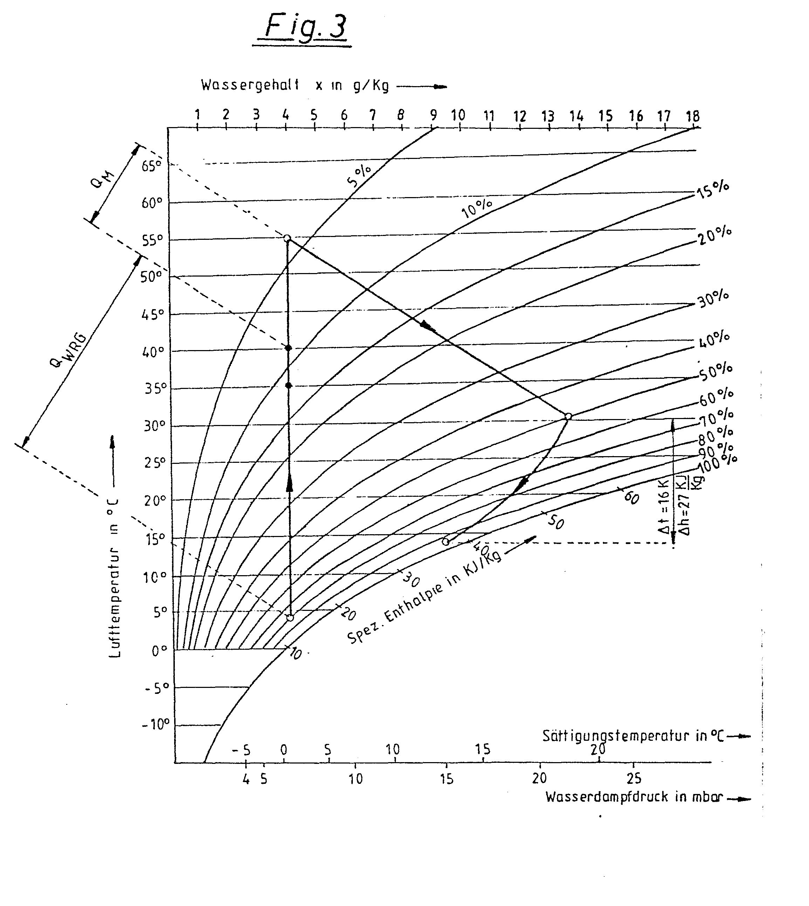

Das Diagramm gemäß Fig. 3 veranschaulicht die Zustandsänderung der Luft in den Wärmeübertragergruppen hinsichtlich Temperatur und Feuchte.

- 8 -

Patentansprüche:

1. Verfahren zur Wärmerückgewinnung aus fluiden Medien, vorzugsweise Luft, mit unterschiedlichen Temperaturen, wobei ein Kreislauf eines Wärmeträgermittels verwendet wird, dessen Eintrittstemperaturen in eine Vorwärmer- bzw. Kühlergruppe mittels eines Wärmepumpenprozesses verändert werden, dadurch gekennzeichnet, daß das einen Fortluftkühler verlassende warme Wärmeträgermittel in einem Kondensator einer Wärmepumpe zusätzlich aufgeheizt und das die Vorwärmer- bzw. Kühlergruppe verlassende kalte Wärmeträgermittel in einem Verdampfer der Wärmepumpe zusätzlich abgekühlt wird.

2. Verfahren nach Anspruch 1, dadurch gekennzeichnet, daß die Eintrittstemperaturen des im separaten Kreislauf geführten Trägermittels durch einen nach dem "Lorenz-Prinzip" betriebenen Wärmepumpenprozeß verändert werden.

3. Verfahren nach den Ansprüchen 1 und 2, dadurch gekennzeichnet, daß die Menge des im Kreislauf geführten Wärmeträgermittels auf ein bestimmtes Verhältnis zu den jeweiligen Volumenströmen der zu- bzw. abströmenden Medien einstellbar ist.

4. Verfahren nach den Ansprüchen 1 bis 3, dadurch gekennzeichnet, daß die Abwärme eines eine Kompressionswärmepumpe antreibenden Motors für das Nachheizen des zuströmenden Mediums verwendet wird.

5. Verfahren nach den Ansprüchen 1 bis 3, dadurch gekennzeichnet, daß die Enthitzungswärme des verdichteten Kältemittels getrennt von der Kondensationswärme in einem zusätzlichen Wärmeübertrager an das aufzuwärmende Fluid abgegeben wird.

_Fig.1_

NW

VW

K

Fortluft

Kond

M

Vap

Außenluft

_Fig.2_

70°

60°

50°

40°

30°

20°

10°

0°

30°C , 50 % r.F.

4°C, 80 % r F.

## Fig. 3

## Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 124 177  (TIMMERMAN)<br>* Figuren 1, 2 * | 1 | F 24 F    7/08<br>F 25 B   29/00<br>F 24 J    3/00 |
| | --- | | |
| A | FR-A-2 496 240  (ROTTNER)<br>* Figur 1 * | 1 | |
| | --- | | |
| A | EP-A-0 060 110  (BORG WARNER LTD.)<br>* Figur 1 * | 1 | |
| | ----- | | |

**RECHERCHIERTE SACHGEBIETE (Int. Cl.4)**

F 24 D    5/00
F 24 D   11/00
F 24 F    7/00
F 24 J    3/00
F 25 B   29/00

Der vorliegende Recherchenbericht wurde für alle Patentansprüche erstellt.

| Recherchenort | Abschlußdatum der Recherche | Prüfer |
|---|---|---|
| BERLIN | 19-06-1984 | PIEPER C |